# EUROPEAN PATENT APPLICATION

(11) **EP 1 667 408 A1**
(43) Date of publication of application: **07.06.2006**
(21) Application number: 05026325.0
(22) Date of filing: 02.12.2005
(51) Int. Cl.: H04M 1/02, H04M 1/23

(54) **Sliding-type portable terminal having protruding keypad**

(30) Priority: 03.12.2004 KR 2004101451; 03.12.2004 KR 2004101452
(71) Applicant: Samsung Electronics Co., Ltd., Suwon-si, Gyeonggi-Do (KR)
(72) Inventor: Ryu, Gwan-Woo, Samsung Electronics Co., Ltd., Suwon-si Gyeonggi-do (KR); Bae, Jong-Gun, Samsung Electronics Co., Ltd., Suwon-si Gyeonggi-do (KR)
(74) Representative: Lang, Johannes

(57) **Abstract**

A portable terminal includes a main housing, a sliding housing coupled to the main housing in such a manner that it can slide to expose or hide a part of a surface of the main housing, a keypad module positioned on the main housing and adapted to be exposed or hidden as the sliding housing moves, and a driving means positioned on the main housing to cause the keypad module, when exposed by the movement of the sliding housing, to protrude from a surface of the main housing. The sliding movement of the sliding housing is converted into up-and-down movement of the keypad module to overcome the difference in level among the upper surface of the sliding housing, the display device, and the keypad for convenient key input.

## Description

### BACKGROUND OF THE INVENTION

### Field of the Invention

The present invention relates to a portable terminal. More particularly, the present invention relates to a keypad for a portable terminal that is adapted to move up and down on a main housing to protrude from a surface of the main housing.

### Description of the Related Art

In general, a portable terminal is an appliance that is used to provide wireless communication between users, or between a user and a service provider using telecommunication base stations. In addition to voice communication service, portable terminals provide various other services, including short message service, mobile banking, television, online games, and videos on demand.

Portable terminals may be classified into bar-type terminals, flip-type terminals, and folder-type terminals. Bar-type terminals have input and output devices, including a communication circuit, a transmitter unit, and a receiver unit, installed on a single housing. Flip-type terminals have a flip cover installed on a bar-type housing. Folder-type terminals have a pair of housings rotatably joined to fold on or unfold from each other, as well as input and output devices distributed on the corresponding housings. Together with folder-type terminals, sliding-type and swing-type terminals have recently appeared to satisfy users' various tastes with improved portability and user convenience. Sliding-type terminals have a pair of housings adapted to linearly reciprocate to be opened or closed and swing-type terminals have a pair of housing adapted to rotate while facing each other to be opened or closed. Those skilled in the art easily understand these various classifications of portable terminals.

As telecommunication services expand from voice communication and short message service transmission to include additional services, portable terminals tend to incorporate more functions, such as mobile banking, television, online games, and videos on demand, among others. In particular, some portable terminals incorporate digital cameras, and can perform not only conventional photography, but also video communication and making and transmitting motion pictures.

For example, the SPH-S2300 model terminals currently available from Samsung Electronics Co., Ltd., the assignee of the present invention, have a barrel-shaped lens for an optical zoom function. They have a display device positioned on a bar-type main housing, a functional keypad positioned on a sliding housing, and a numeric keypad exposed or hidden by the sliding housing. These terminals perform both the functions of conventional terminals and the functions of digital cameras.

Terminals having a keypad exposed or hidden by the sliding housing have a drawback, however, in that key operation is inconvenient due to the different levels of the keypad and the display device.

In addition, in terminals having a functional keypad positioned on the sliding housing and a numeric keypad exposed or hidden by the sliding housing, as in the case of SPH-S2300 terminals, the numeric keypad is positioned between the display device and the sliding housing. As a result, the numeric keypad is exposed between the display device and the sliding housing while being recessed. This makes the operation of the numeric keys even more inconvenient.

Accordingly, there is a need for an improved housing for a sliding-type portable terminal which provides convenient access to a keypad on the terminal.

### SUMMARY OF THE INVENTION

An aspect of the present invention is to address at least the above problems and/or disadvantages and to provide at least the advantages described below. Accordingly, an aspect of the present invention is to provide a portable terminal having a protruding keypad adapted to be exposed or hidden by a sliding housing for easy key operation.

In order to accomplish this object, a portable terminal having a protruding keypad includes a main housing, a sliding housing coupled to the main housing in such a manner that it can slide to expose or hide a part of a surface of the main housing, a keypad module positioned on the main housing and adapted to be exposed or hidden as the sliding housing moves, and a driving means positioned on the main housing to cause the keypad module, when exposed by the movement of the sliding housing, to protrude from a surface of the main housing.

### BRIEF DESCRIPTION OF THE DRAWINGS

The above and other objects, features, and advantages of certain exemplary embodiments of the present invention will be more apparent from the following description taken in conjunction with the accompanying drawings, in which:
FIG. 1 is an exploded perspective view of a portable terminal having a protruding keypad according to a first exemplary embodiment of the present invention;
FIG. 2 is a lateral view showing the construction of the protruding keypad of the portable terminal shown in FIG. 1;
FIGS. 3 to 5 show the operation of the protruding keypad of the portable terminal shown in FIG. 1;
FIG. 6 is an exploded perspective view of a portable terminal having a protruding keypad according to a second exemplary embodiment of the present invention;
FIG. 7 is a lateral view showing the construction of the protruding keypad of the portable terminal shown in FIG. 6;
FIGS. 8 to 10 show the operation of the protruding keypad of the portable terminal shown in FIG. 6;
FIG. 11 is an exploded perspective view of a portable terminal having a protruding keypad according to a third exemplary embodiment of the present invention;
FIGS. 12 and 13 are perspective views showing combinations of pinion gears for driving the protruding keypad of the portable terminal shown in FIG. 11;
FIGS. 14 to 17 show the operation of the protruding keypad of the portable terminal shown in FIG. 11;
FIG. 18 is an exploded perspective view of a portable terminal having a protruding keypad according to a fourth exemplary embodiment of the present invention;
FIGS. 19 and 20 show the operation of the protruding keypad of the portable terminal shown in FIG. 18; and
FIG. 21 is an exploded perspective view of a portable terminal having a protruding keypad according to a fifth exemplary embodiment of the present invention.
Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

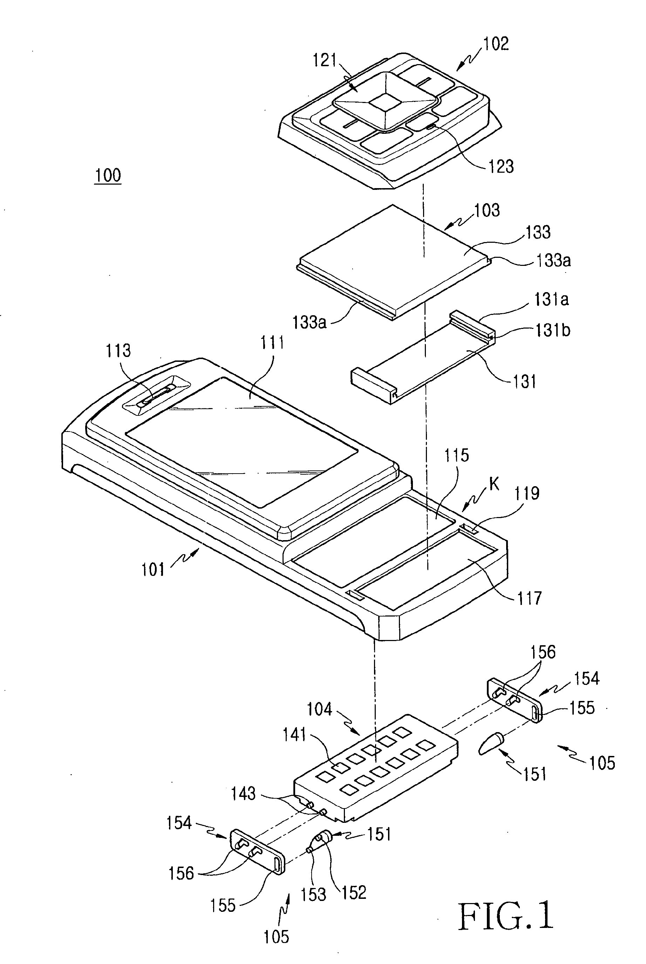

As shown in FIG. 1, a portable terminal 100 having a protruding keypad according to a first exemplary embodiment of the present invention includes a main housing 101, a sliding housing 102, and a keypad module 104 adapted to move up and down on the main housing 101 to protrude from a surface of the main housing 101.

The main housing 101 has a display device 111 and a receiver unit 113 positioned on a surface thereof. Preferably, the receiver unit 113 is positioned above the display device 111. The part of the surface of the main housing 101 on which the display device 111 and the receiver unit 113 are not positioned is at a lower level than that of the part on which the display device 111 is positioned. This is so that the entire terminal 100 has a substantially continuous contour, particularly a uniform level of the surface on which the display device 111 is positioned, when the sliding housing 102 is coupled thereto. Although the surface on which the display device 111 is positioned may be intentionally curved to have different levels depending on the terminal design, as a whole, the surface is preferably configured as a substantially continuously curved surface.

The main housing 101 has an opening 115 formed on a portion K of the part of the surface, on which the display device 111 and the receiver unit 113 are not positioned, and a seating surface 117 is formed on the remaining portion thereof.

The opening 115 exposes the keypad module 104 and provides it with a passage along which it can move up and down. The seating surface 117 provides a space for accommodating the sliding module 103 to couple with the sliding housing 102.

The sliding housing 102 is positioned on the main housing 101 in such a manner that it can slide to expose or hide the portion K of the surface. The sliding housing 102 has a function keypad 121 positioned on a surface thereof, which is preferably composed of at least one key chosen from a menu calling key, a direction key, a call/end key, and a select/cancel key. In general, the function keypad of a portable terminal is composed of various combinations of the above-enumerated keys and has some differences in arrangement or allotted functions, depending on the terminal type and the manufacturer's preferences.

The sliding housing 102 has a transmitter unit 123 positioned on the surface thereof. The receiver and transmitter units 113 and 123 are preferable positioned on the upper and lower ends of the terminal 100, respectively, and are spaced the maximum distance apart from each other when the sliding housing 102 has slid and exposed the portion K of the surface of the main housing 101.

To couple the sliding housing 102 to the main housing 101, the portable terminal 100 has a sliding module 103. The sliding module 103 includes a guide plate 131 fixed to the main housing 101 and a sliding plate 133 fixed to the other surface of the sliding housing 102. The sliding plate 133 is coupled to the guide plate 131 so that it can slide.

The guide plate 131 is fixed to the seating surface 117 of the main housing 101 and has a pair of guide ribs 131a protruding from both lateral ends while extending in the direction of movement of the sliding plate 133. The guide ribs 131a have guide grooves 131b formed on their inner surfaces in the longitudinal direction while facing each other.

The sliding plate 133 has sliding ribs 133a protruding outward from both lateral ends. The sliding ribs 133a extend in the longitudinal direction of the sliding housing 102 and are coupled to the guide ribs 131b so that they can slide.

As the sliding plate 133 slides on the guide plate 131, the sliding housing 102 can slide on the main housing 101.

The keypad module 104 is positioned inside the main housing 101 and is adapted to move up and down, as the sliding housing 102 slides, to selectively protrude from a surface of the main housing 101. The keypad module 104 has a numeric keypad 141 positioned on the upper surface thereof, which is composed of 12 keys including special characters * and # arranged in 6×2 array.

The terminal 100 has a driving means 105 for moving the keypad 104 up and down. The driving means 105 includes a rotation link 151 and a sliding link 154, and converts the sliding movement of the sliding housing 102 into a driving force for moving the keypad module 104 up and down.

A portion between both ends of the rotation link 151 is rotatably coupled to the inner peripheral surface of the main housing 101 while an end thereof interferes with the lower surface of the sliding housing 102. In particular, an end of the rotation link 151 protrudes via a through-hole 119 formed on the main housing 101 and interferes with the sliding housing 102.

Although not shown in the drawings, the sliding housing 102 preferably has a driving groove formed on the lower surface thereof. The driving groove has a depth large enough to receive an end of the rotation link 151 when the sliding housing 102 hides the keypad module 104. The driving groove extends in the direction of movement of the sliding housing 102 in such a manner that the depth of an end of the driving groove gradually decreases towards an end of the sliding housing 102.

The rotation link 151 has a rotation protrusion 152 positioned between the ends of the rotation link 151 to be rotatably coupled to the inner peripheral surface of the main housing 101. The distance between the rotation protrusion 152 and the outer peripheral surface of the rotation link 151 gradually increases in a curved shape towards an end of the rotation link 151.

When the shape of the driving groove and the position of the rotation protrusion 152 are configured as described above, the bottom surface of an end of the driving groove and the outer peripheral surface of an end of the rotation link 151 interfere with each other when the sliding housing 102 slides and exposes the keypad module 104, thereby rotating the rotation link 151.

The sliding link 154 is adapted to interfere with the other end of the rotation link 151 and, as the rotation link 151 rotates, slides on the inner peripheral surface of the main housing 101. To transmit the rotation of the rotation link 151 to the sliding link 154, the rotation link 151 has a first link protrusion 153 formed on the other end thereof and the sliding link 154 has a first link hole 155 formed thereon. The first link hole 155 extends in a direction substantially perpendicular to the direction of movement of the sliding link 154. The first link protrusion 153 is positioned in the first link hole 155 and transmits the rotation of the rotation link 151 to the sliding link 154. As the rotation link 151 rotates, the displacement of the first link protrusion 153 in the direction of movement of the sliding link 154 is converted into a sliding movement of the sliding link 154.

The sliding movement of the sliding link 154 is converted into an up-and-down movement of the keypad module 104. To do this conversion, the sliding link 154 has a second link hole 156 formed thereon and the keypad module 104 has a second link protrusion 143 formed on a lateral surface thereof.

The second link hole 156 extends in a direction slanted a predetermined angle from the direction of movement of the sliding link 154. An end of the second link hole 156 extends substantially parallel to the direction of movement of the sliding link 154 and is closer to the first link hole 155 than the other end thereof.

The second link protrusion 143 extends from a lateral surface of the keypad module 104 and is positioned in the second link hole 156. As the sliding link 154 slides, the second link protrusion 143 moves up and down along the slanted surface of the second link hole 156. As a result, the keypad module 104 moves up and down via the opening 115.

An end of the second link hole 156 extending substantially parallel to the sliding housing 102 supports the keypad module 104, when it has completely protruded from a surface of the main housing 101, and prevents it from moving down. In particular, when the keypad module 104 has completely protruded from a surface of the main housing 101, the second link protrusion 143 is positioned on an end of the second link hole 156. Therefore, even when the keypad module 104 is urged down into the main housing, such as by its own weight or by external forces, the downward movement of the second link protrusion 143 is limited by the end of the second link hole 156.

Preferably, a pair of second link holes 156 and a pair of link protrusions 143 are provided and the driving means 105 are positioned on both sides of the keypad module 104, respectively, while being substantially symmetric to each other, to maintain the keypad module 104 in a horizontal position.

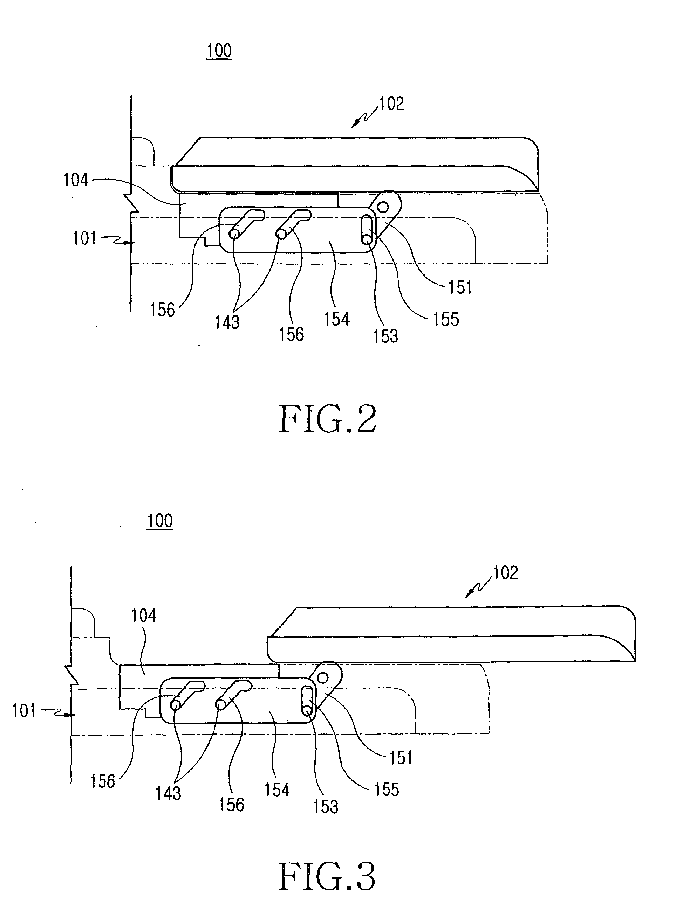

FIGS. 2 to 5 are lateral views showing the construction and operation of the portable terminal 100 having a protruding keypad configured as described above. In the following description of the construction and operation of the portable terminal 100, the upper and lower ends of the first and second link holes 155 and 156 will be defined based on the vertical positioning shown in the drawings.

As shown in FIG. 2, when the sliding housing 102 initially hides the keypad module 104, the first link protrusion 153 is positioned on the lower end of the first link hole 155 and the second link protrusions 143 are positioned on the lower end of the second link holes 156.

In FIG. 3, the sliding housing 102 has slid, but the bottom surface of the driving groove on the lower surface of the sliding housing 102 and the outer peripheral surface of an end of the rotation link 151 have not yet interfered with each other. The sliding link 154 and the keypad module 104 do not move at all, because the rotation link 151 does not rotate until the interference occurs. In this state, the upper surface of the keypad module 104 is completely exposed by the sliding housing 102.

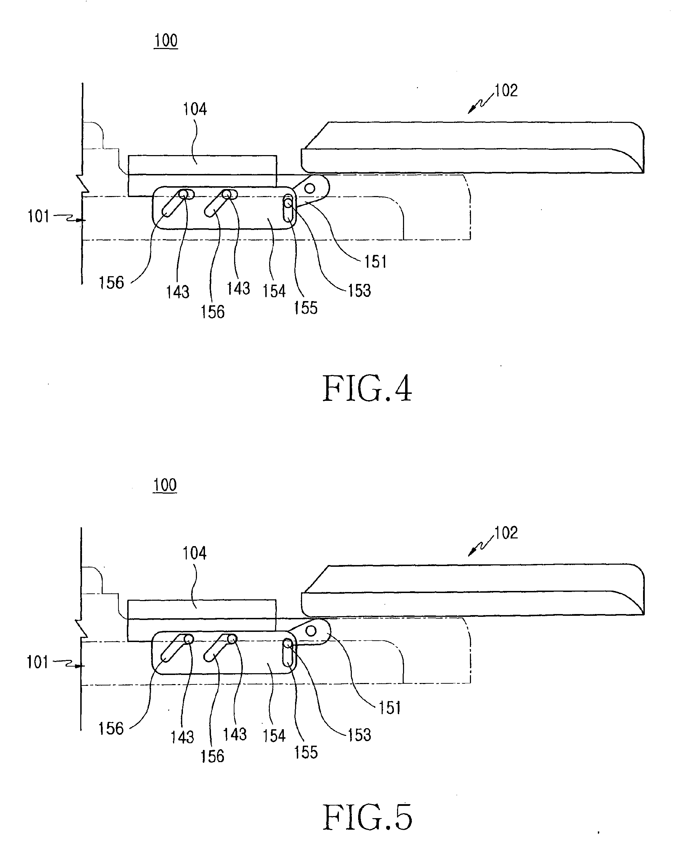

In FIG. 4, the bottom surface of the driving groove and the rotation link 151 have interfered with each other and rotated the rotation link 151. The keypad module 104 has completely protruded, but the second link protrusions 143 are not yet completely positioned on an end of the second link holes 156.

As the rotation link 151 is rotated, the first link protrusion 153 pivots about the rotation protrusion 152 and the sliding link 154 moves in a direction opposite to the direction of movement of the sliding housing 102. The displacement of the first link protrusion 153 in the direction of movement of the sliding link 154 is converted into movement of the sliding link 154 and the displacement of the first link protrusion 153 in a direction perpendicular to the direction of movement of the sliding link 154 is limited by the first link hole 155.

As the sliding link 154 moves, the second link protrusions 143 travel from the lower end of the second link holes 156 to the upper end along the slanted surface. As a result, the keypad module 104 protrudes from the upper surface of the main housing 101.

The sliding housing 102 moves further in such a direction that the keypad module 104 is exposed, while the second link protrusions 143 are positioned on the upper end of the second link holes 156, and rotates the rotation link 151. The sliding link 154 is then moved further in a direction opposite to the direction of movement of the sliding housing 102. After the sliding housing 102 is completely moved, the second link protrusions 143 are positioned inside an end of the second link holes 156. The up-and-down movement of the keypad module 104 is limited in this state and, even when the user does not operate the numeric keypad 141, the keypad module 104 can remain stable without moving down into the main housing 101. Preferably, a pair of second link holes 156 and a pair of second link protrusions 143 are provided so that the keypad module 104 remains in a horizontal position even when the key operation force is concentrated on a specific location. In summary, the protruding keypad for a portable terminal according to the present invention is exposed or hidden by the sliding housing 102 and, when exposed, protrudes up to a surface of the terminal on which a display device is positioned.

As the rotation link 151 rotates on the main housing 101, the first link protrusion 153 is displaced in the direction of movement of the sliding housing 102 and displaced in a direction perpendicular to the direction of movement of the sliding housing 102. By directly transmitting the perpendicular displacement of the first link protrusion 153 to the keypad module 104, the keypad module 104 can be moved up and down. In particular, the keypad module 104 has a groove formed on the lateral surface thereof that extends in the direction of movement of the sliding housing 102. The groove is engaged by the first link protrusion 153, so that the perpendicular displacement of the first link protrusion 153 is converted into up-and-down displacement of the keypad module 104.

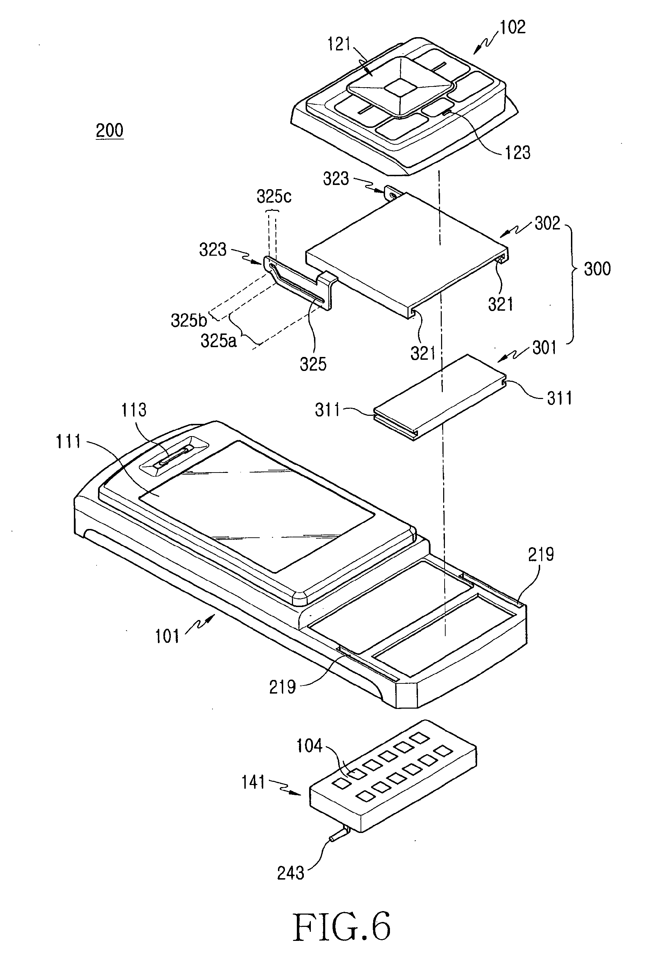

FIGS. 6 to 10 show a portable terminal 200 having a protruding keypad according to a second exemplary embodiment of the present invention.

The portable terminal according to this exemplary embodiment has a construction similar to that of the previous exemplary embodiment, except for the driving means for moving the keypad module 104 up and down. In the following description of the present exemplary embodiment, the same components as in the previous exemplary embodiment are given the same reference numerals and a detailed description will not be repeated for conciseness.

The portable terminal 200 according to the second exemplary embodiment of the present invention includes a main housing 101, a sliding housing 102 coupled to the main housing 101 in such a manner that it can slide thereon, and a keypad module 104 adapted to move up and down on the main housing 101 while being exposed or hidden by the sliding housing 102.

The terminal 200 has a sliding module 300 to couple the sliding housing 102 to the main housing 101 in such a manner that it can slide thereon.

The sliding module 300 includes a guide plate 301 fixed to the main housing 101 and a sliding plate 302 fixed to the lower surface of the sliding housing 102 and coupled to the guide plate 301 in such a manner that it can slide relative to it.
The guide plate 301 has guide grooves 311 formed on both lateral surfaces thereof while extending in the direction of movement of the sliding housing 102. The sliding plate 302 has sliding ribs 321 formed on both lateral ends thereof, which face and extend towards each other. The sliding ribs 321 are coupled to the guide grooves 311 in such a manner that they can slide therein so that the sliding housing 102 can slide on the main housing 101.

A driving device for moving the keypad module 104 up and down includes a sliding link 323 extending from the sliding plate 302 and a link protrusion 243 formed on a lateral surface of the keypad module 104. Preferably, the sliding link 323 is integrally formed with the sliding plate 302.

The sliding link 323 extends downward from a lateral surface of the sliding plate 302 and is drawn into the main housing 101. The sliding link 323 extends in the direction of movement of the sliding plate 302 from inside the main housing 101 and is positioned adjacent to a lateral surface of the keypad module 104. The sliding link 323 has a link hole 325 formed thereon and is positioned inside the main housing 101. The main housing 101 has a sliding hole 219 formed thereon to provide the sliding link 323 with a space in which it can extend and slide. The sliding hole 219 is formed on one or both sides of the main housing 101 while extending in the longitudinal direction.

The link hole 325 includes a first section 325a extending in the direction of movement of the sliding plate 302, a second section 325b extending from an end of the first section 325a while being slanted from the first section 325a, and a third section 325c extending from an end of the second section 325b while being parallel to and away from the first section 325a.

The link protrusion 243 is positioned in the link hole 325 and, as the sliding link 323 travels, is moved up and down along the trajectory of the link hole 325.

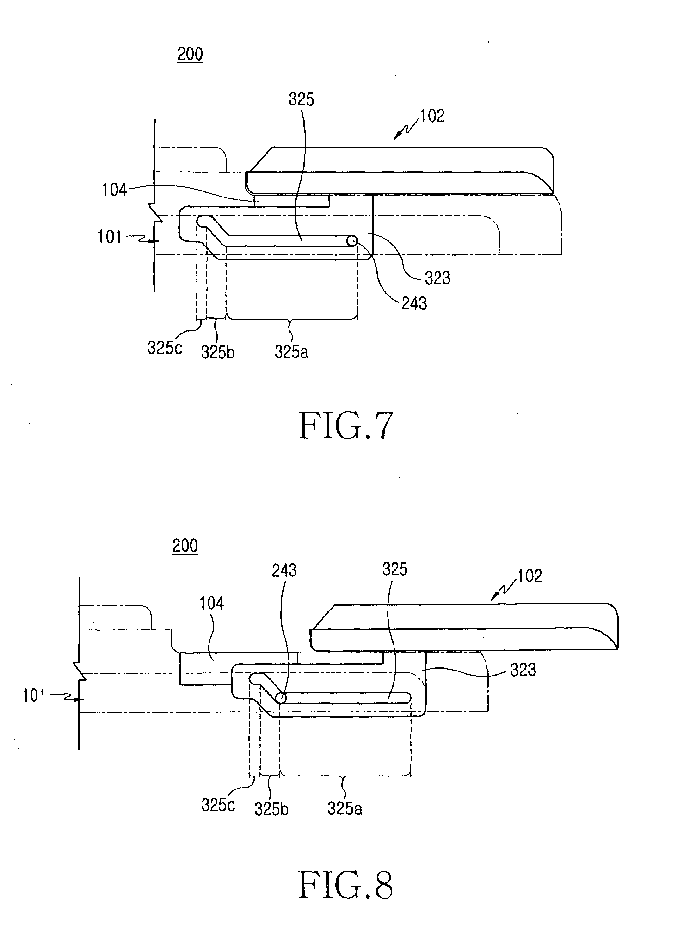

The up-and-down movement of the link protrusion 243 and the keypad module 104 will now be described in detail with reference to FIGS. 7 to 10.

In FIG. 7, the sliding housing 102 initially hides the keypad module 104 and the link protrusion 243 is positioned on an end of the first section 325a, particularly on an end of the first section 325a spaced from the second section 325b.

The link protrusion 243 and the keypad module 104 do not depart from the initial position until the sliding housing 102 slides and the link protrusion 243 is positioned on the boundary between the first and second sections 325a and 325b, as shown in FIG. 8.

The keypad module 104 is completely exposed to a surface of the main housing 101 and is ready to move up, when the link protrusion 243 is positioned on the boundary between the first and second sections 325a and 325b.

As the sliding housing 102 slides further and the link protrusion 243 passes along the second and third sections 325b and 325c, the keypad module 104 gradually moves up and protrudes from the upper surface of the main housing 101.

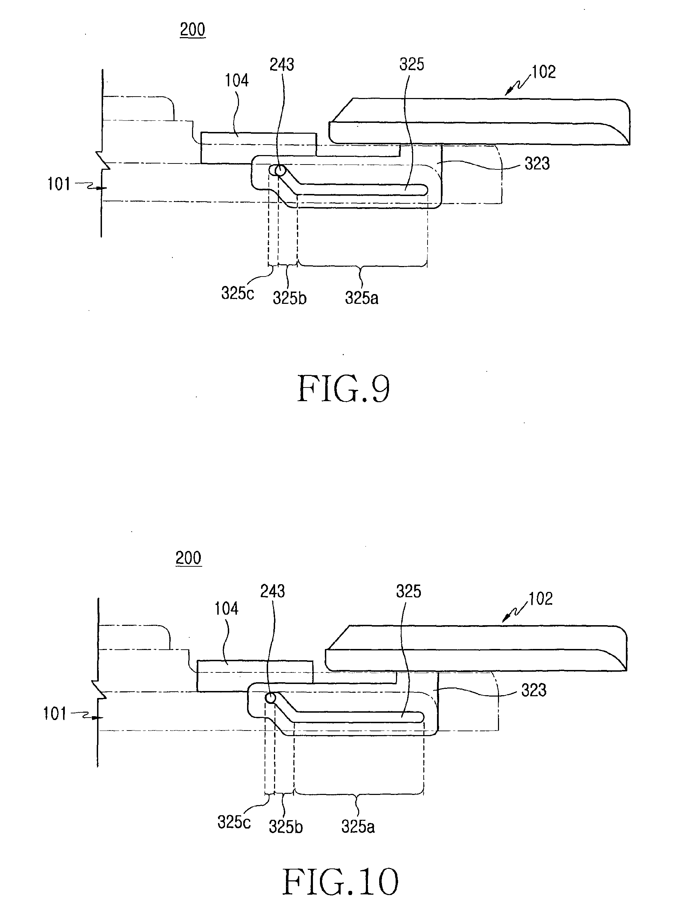

When the link protrusion 243 is positioned on the boundary between the second and third sections 325b and 325c, as shown in FIG. 9, the keypad module 104 protrudes completely. In this state, the link protrusion 243 is still positioned on the slanted surface of the second section 325b to some degree and, if acted on by an external force, the keypad module 104 may move down.

Therefore, the sliding housing 102 travels further to move the sliding link 323 and position the link protrusion 243 in the third section 325c.

The third section 325c extends in the direction of movement of the sliding housing 102 and the link protrusion 243 is adapted to move up and down together with the keypad module 104. Therefore, the link protrusion 243 cannot move up and down in the third section 325c of the link hole 325.

Consequently, the keypad module 104 can remain stable without moving down, even when the user operates keys included in the keypad module 104.

The sliding link 323 and the link protrusion 243 may be positioned on each side of the keypad module 104 while being substantially symmetric to each other for improved structural stability of the keypad module 104.

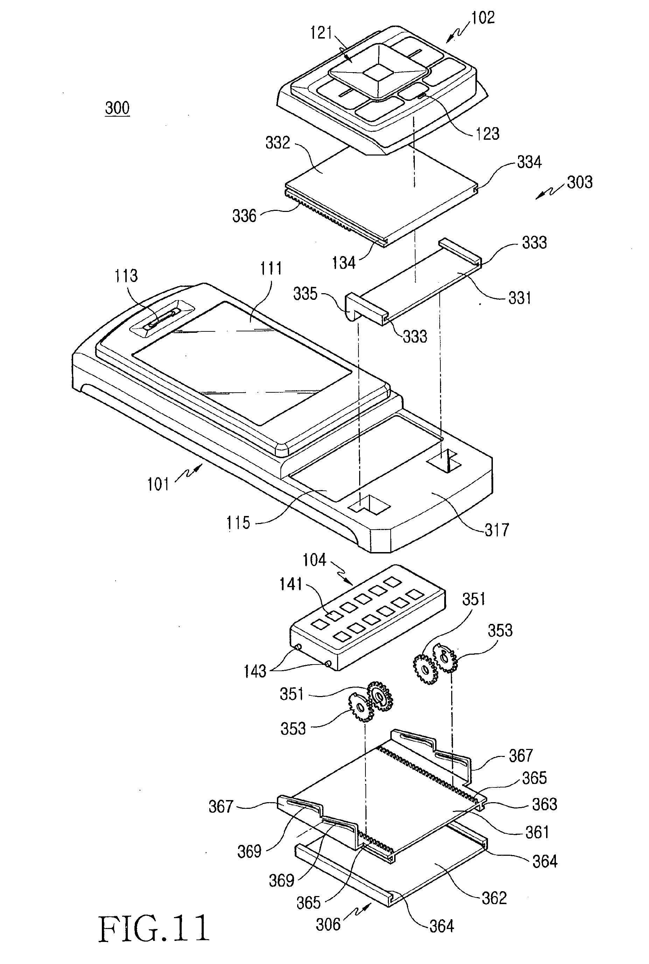

As shown in FIG. 11, a portable terminal 300 according to a third exemplary embodiment of the present invention includes a main housing 101, a sliding housing 102, and a keypad module 104 adapted to move up and down on the main housing 101 to protrude from a surface of the main housing 101.

The portable terminal 300 according to this exemplary embodiment has a construction similar to that of the previous exemplary embodiments, except for the driving means for moving the keypad module 104 up and down. In the following description of the present exemplary embodiment, the same components as in the previous exemplary embodiment are given the same reference numerals and a detailed description will not be repeated for conciseness.

The portable terminal 300 has a first sliding module 303 to couple the sliding housing 102 to the main housing 101. The first sliding module 303 includes a first guide plate 331 fixed to the main housing 101 and a first sliding plate 332 fixed to the other surface of the sliding housing 102. The first sliding plate 332 is coupled to the first guide plate 331 in such a manner that it can slide thereon.

The first guide plate 331 is fixed to the seating surface 317 on the main housing 101 and has a pair of guide ribs 333 protruding from both lateral ends towards a surface thereof, respectively, while extending in the direction of movement of the first sliding plate 332. The upper ends of the guide ribs 333 are bent towards each other.

The first sliding plate 332 has guide grooves 334 formed on both lateral ends thereof. As the guide grooves 334 engage the guide ribs 333, the first sliding plate 332 is coupled to the first guide plate 331 so that it can slide thereon. It can be easily understood by those skilled in the art that the guide ribs are formed on both lateral ends of the first sliding plate 332, and the guide grooves 334 are formed on both lateral ends of the first guide plates 331, to be coupled to each other while being able to slide.

As the first sliding plate 332 slides on the first guide plate 331, the sliding housing 102 can slide on the main housing 101.

The terminal 300 has a gear module and sliding links 367 to move the keypad module 104 up and down.

The gear module includes first rack gears 336 formed on the lower surface of the first sliding plate 332, first and second pinion gears 351 and 353 positioned inside the main housing 101, and second rack gears 365.

The first rack gears 336 are formed on both lateral ends of the lower surface of the first sliding plate 332, respectively, in the direction of movement of the sliding housing 102. The first rack gears 336 may be directly formed on the lower surface of the sliding housing 102.

The first guide plate 331 has supports 335 formed on both sides of the lower surface thereof to accommodate the first and second pinion gears 351 and 353. When the first guide plate 331 is coupled to the seating surface 317, the supports 335 are positioned inside the main housing 101. The first and second pinion gears 351 and 353 are rotatably coupled to the supports 335, respectively. As the first gear racks 336 moves, the first pinion gears 351, which are interlocked with the first gear racks 336, rotate.

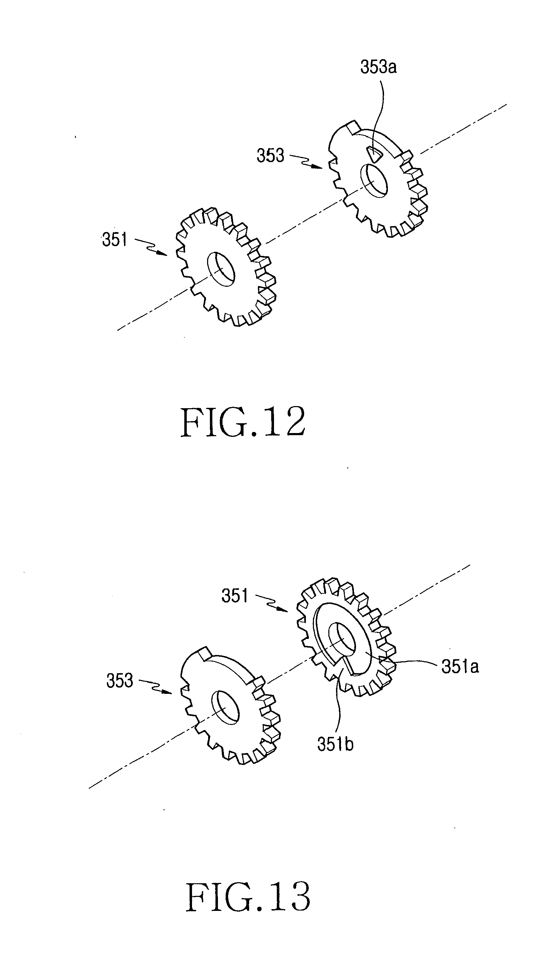

The first and second pinion gears 351 and 353 are coupled while facing each other. As shown in FIGS. 12 and 13, the first pinion gears 351 have a rotation groove 351a and a first rotation protrusion 351b formed on a surface thereof and the second pinion gears 353 have a second rotation protrusion 353a formed on a surface thereof.

The rotation grooves 351a are recessed from a surface of the first pinion gears 351 while extending in the circumferential direction. The first rotation protrusions 351b are formed in a predetermined position on the rotation grooves 351a. In particular, the rotation grooves 351a span a limited angular range in the circumferential direction on a surface of the first pinion gears 351 and the first rotation protrusions 351b span the remaining range.

The second rotation protrusions 353a protrude from a surface of the second pinion gears 353. When the first and second pinion gears 351 and 353 are coupled to the supports 335, the second rotation protrusions 353a are positioned in the rotation grooves 351a and, as the first pinion gears 351 rotate, interfere with the first rotation protrusions 351b. The second pinion gears 353 rotate on the supports 335 as soon as the second rotation protrusions 353a interfere with the first rotation protrusions 351b.

In particular, the second pinion gears 335 selectively rotate only when the first and second rotation protrusions 351b and 353a interfere with each other. The second rack gears 365 are adapted to slide inside the main housing 101 and, as the second pinion gears 353 rotate, slide while being interlocked with them.

The main housing 101 has a second sliding module 306 positioned therein for stable sliding movement of the second rack gears 365.

The second sliding module 306 has a second guide plate 362 fixed to the inner peripheral surface of the main housing 101 and a second sliding plate 361 coupled to the second guide plate 362 so that it can slide thereon. As in the case of the first sliding module 303, the second sliding module 306 has guide ribs 364 and guide grooves 363 so that the second guide plate 362 and the second sliding plate 361 can be coupled to each other so that they can slide relative to each other.

The second rack gears 365 are formed on a surface of the second sliding plate 361 in the direction of movement of the sliding housing 102.

The operation of the gear module and the second sliding plate 361, as the sliding housing 102 slides, will now be described. As the user moves the sliding housing 102, the first rack gears 336 travel and rotate the first pinion gears 351. The first and second rotation protrusions 351b and 353a do not yet interfere with each other and only the first pinion gears 351 rotate a predetermined angle. As the first pinion gears 351 rotate further and the first and second rotation protrusions 351b and 353a interfere with each other, the second pinion gears 353 rotate and move the second rack gears 365. Rotation of the first and second pinion gears 351 and 353 moves the second rack gears 365 in a direction opposite to the direction of movement of the sliding housing 102.

The sliding links 367 are preferably integral with the second rack gears 365. More particularly, the sliding links 367 are preferably integrally formed on the second sliding plate 361 and move together with the second rack gears 365.

The sliding links 367 have link holes 369 that are slanted relative to the direction of movement of the sliding housing 102. An end of the link holes 369 extends substantially parallel to the direction of movement of the sliding housing 102. The keypad module 104 has at least one link protrusion 143 formed on at least one lateral surface thereof, preferably on both lateral surfaces thereof, which are coupled to the link holes 369 in such a manner that they can move therein.

As the sliding links 367 move, the keypad module 104 moves up and down along the trajectory of the link holes 369 which are slanted relative to the direction of movement of the sliding housing 102.

Although the gear module, the sliding links 367, and the link protrusions 143 may be formed only on one side of the keypad module 104, they are preferably positioned on both sides of the keypad module 104 while being substantially symmetric to each other to maintain the keypad module 104 in a horizontal position. In particular, a pair of link protrusions 143 are preferably formed on both lateral surfaces of the keypad module 104, respectively.

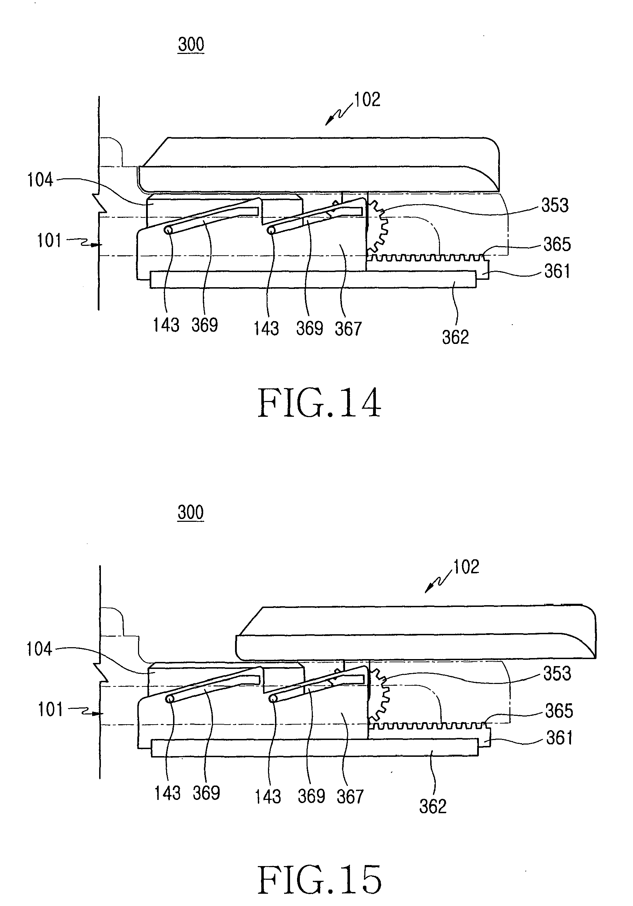

A procedure for causing the keypad 141 of the portable terminal 300 to protrude will now be described with reference to FIGS. 14 to 17.

When the sliding housing 102 completely hides the keypad module 104, as shown in FIG. 14, the link protrusions 143 are positioned on the lowest point of the link holes 369.

When the sliding housing 102 has slid, but the keypad module 104 is not yet completely exposed, as shown in FIG. 15, the link protrusions 143 still remain on the lowest point of the link holes 369. Although the first pinion gears 351 have rotated, the first rotation protrusions 351b do not yet interfere with the second rotation protrusions 353a. As a result, the second pinion gears 353 still remain stationary without rotating.

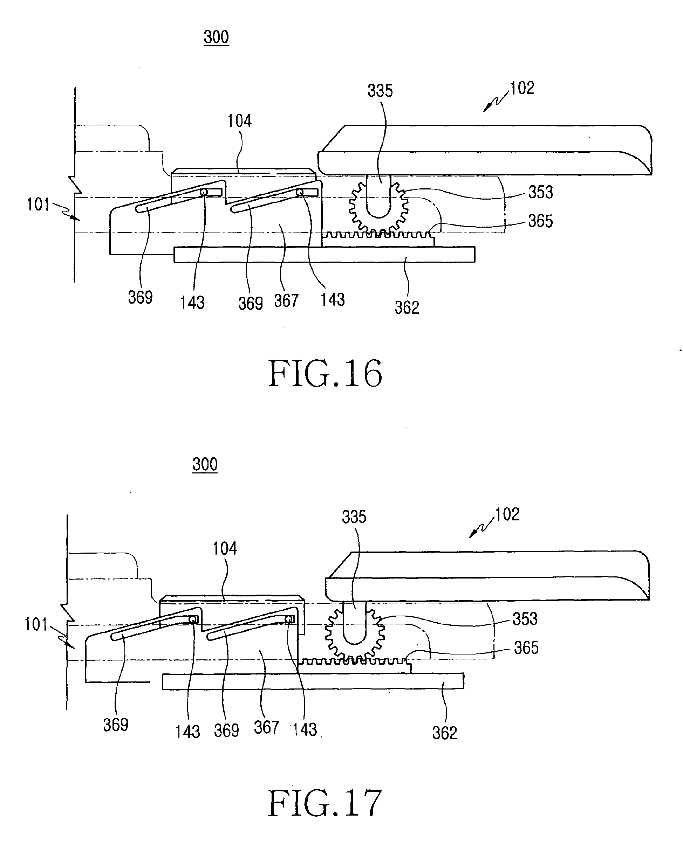

When the sliding housing 102 completely exposes the keypad module 104, as shown in FIG. 16, the first and second rotation protrusions 351b and 353a interfere with each other and rotate the second pinion gears 353, which then move the second rack gears 365. In particular, the first and second rotation protrusions 351b and 353a interfere with each other as soon as the sliding housing 102 completely exposes the keypad module 104. Then, the second rack gears 365 move together with the second sliding plate 361. At the same time, the sliding links 367 travel and gradually move the link protrusions 143 upwards.

When the link protrusions 143 are positioned on the highest point of the link holes 369, the sliding housing 102 further travels a predetermined distance. When the sliding housing 102 has completely moved, referring to FIG. 17, the link protrusions 143 are positioned on an end of the link holes 369, particularly on a part thereof extending substantially parallel to the direction of movement of the sliding housing 102. After the movement of the sliding housing 102 is over, downward movement of the keypad module 104 into the main housing 101 is limited.

The protruding keypad of the portable terminal 300 according to the third exemplary embodiment of the present invention, constructed as described above, is adapted to be exposed or hidden by the sliding housing 102 and, when exposed, protrude from a surface of the terminal on which the display device 111 is positioned.

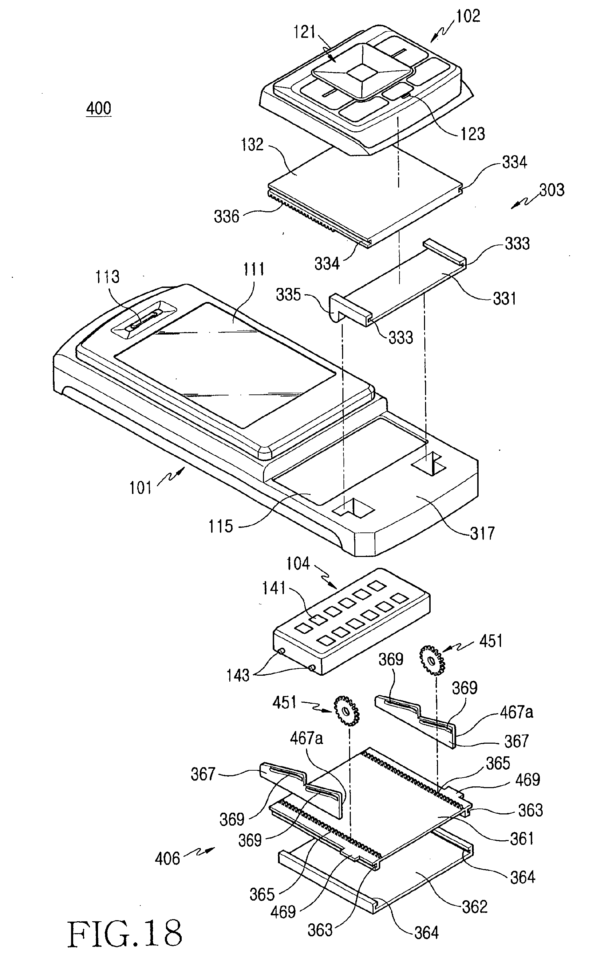

FIGS. 18 to 20 show a portable terminal 400 having a protruding keypad according to a fourth exemplary embodiment of the present invention.

The portable terminal according to this exemplary embodiment has a construction similar to that of the previous exemplary embodiment, except for the gear module for moving the keypad module 104 up and down. In the following description of the present exemplary embodiment, the same components as in the previous exemplary embodiment are given the same reference numerals and a detailed description will not be repeated for conciseness.

The gear module for moving the keypad module 104 up and down includes first rack gears 336 formed on the lower surface of the sliding plate 331, pinion gears 451 positioned in the main housing 101 in such a manner that they can rotate while being interlocked with the first rack gears 336, and second rack gears 365 positioned in the main housing 101 so that they can slide while being interlocked with the pinion gears 451. As the second rack gears 365 slide, the sliding links 367 are selectively interlocked with them and slide in the main housing 101. In particular, the first rack gears 336, the pinion gears 451, and the second rack gears 365 are simultaneously interlocked as the sliding housing 102 slides.

In the previous exemplary embodiment, the sliding links 367 can slide only when the first and second rotation protrusions 351b and 353a of the first and second pinion gears 351 and 353 interfere with each other.

In the present exemplary embodiment, the second sliding plate 361 has a driving protrusion 469 formed on a lateral end thereof to slide the sliding links 367. As in the previous exemplary embodiment, the gear module and the driving protrusion 469 are preferably formed on both sides of the keypad module 104 while being substantially symmetric to each other.

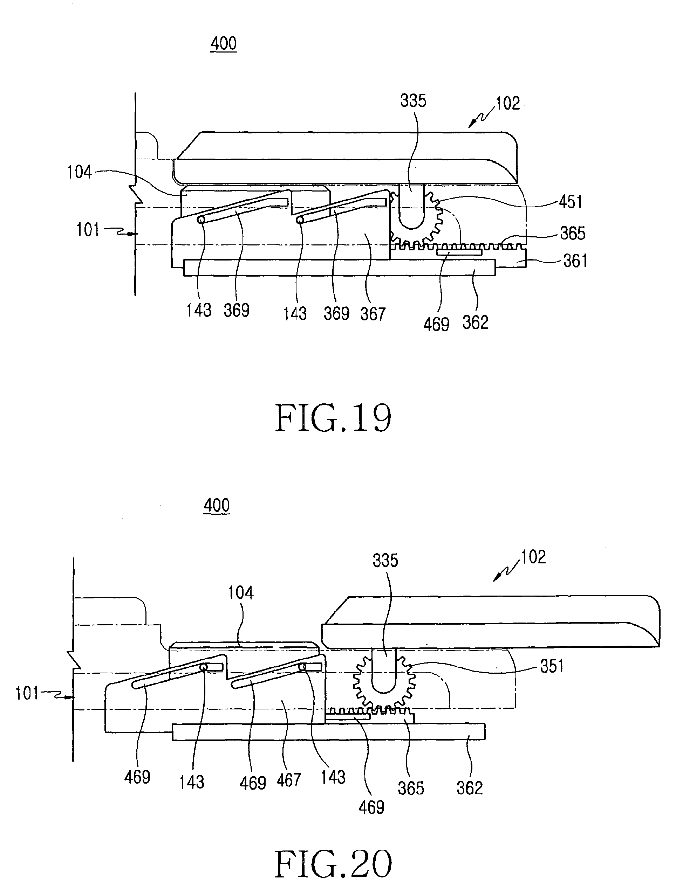

When the sliding housing 102 slides from a state in which it hides at least a part of the keypad module 104, referring to FIGS. 19 and 20, the driving protrusions 469 do not interfere with any component and move in a direction opposite to the direction of movement of the sliding housing 102.

As the sliding housing 102 slides further and the keypad module 104 is completely exposed, the driving protrusions 469 interfere with an end 467a of the sliding links 367, which then move in a direction opposite to the direction of movement of the sliding housing 102. As a result, the keypad module 104 gradually moves upward.

As the sliding housing 102 further moves a predetermined distance while the keypad module 104 is completely exposed, the movement of the sliding housing 102 is complete. In this state, the link protrusions 143 are positioned on an end of the link holes 369 and limit the downward movement of the keypad module 104 into the main housing 101.

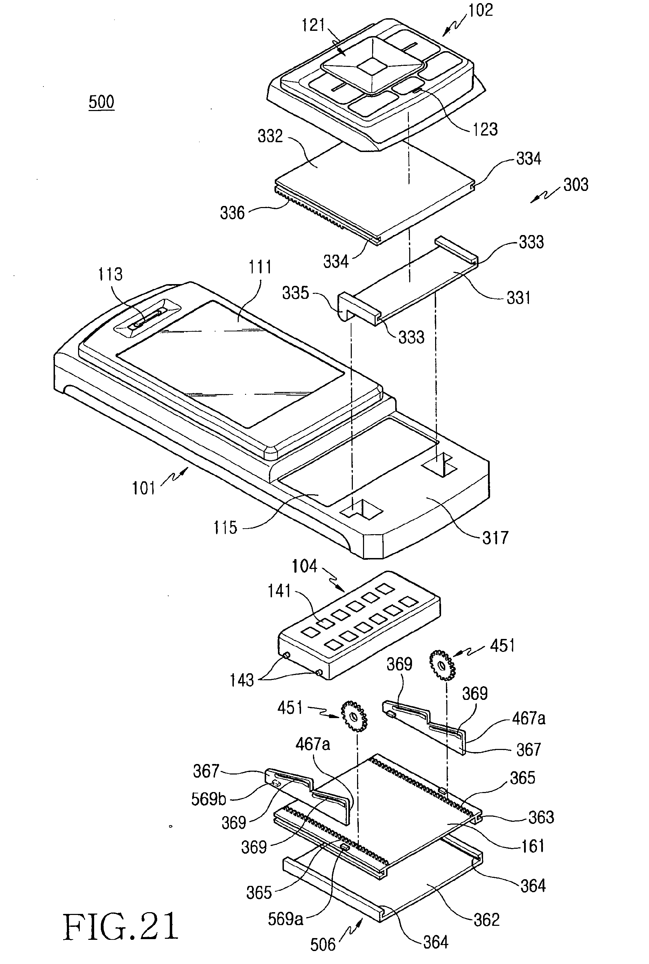

FIG. 21 is an exploded perspective view showing a portable terminal 500 having a protruding keypad according to a fifth exemplary embodiment of the present invention. The portable terminal 500 having a protruding keypad according to the fifth exemplary embodiment of the present exemplary embodiment has a construction similar to that of the fourth exemplary embodiment of the present invention, except that, in order to slide the sliding links 367, the sliding links 367 have following protrusions 569b formed thereon, in addition to driving protrusions 569a, which interfere with the driving protrusions 569a. In the following description of the fifth exemplary embodiment, the same components as in the fourth exemplary embodiment are given the same reference numerals and a detailed description will not be repeated for conciseness.

The portable terminal 500 having a protruding keypad according to the fifth exemplary embodiment of the present invention has driving protrusions 569a formed on a surface of the second sliding plate 361 and following protrusions 569b formed on a surface of the sliding links 367, in order to slide the sliding links 367. As the second sliding plate 361 slides, the driving protrusions 569a interfere with the following protrusions 569b and selectively move the sliding links 367. It can be easily understood by those skilled in the art that the driving protrusions 569a and the following protrusions 569b do not interfere with each other when the sliding housing 102 hides at least a part of the keypad module 104, but interfere with each other and slide the sliding links 367 as soon as the sliding housing 102 completely exposes the keypad module 104.

The portable terminal having a protruding keypad according to the exemplary embodiments of present invention has a keypad module adapted to move up and down to convert the sliding movement of the sliding housing into an up-and-down movement of the keypad module to overcome the difference in level among the upper surface of the sliding housing, the display device, and the keypad for convenient key input.

While the invention has been shown and described with reference to certain embodiments thereof, it will be understood by those skilled in the art that various changes in form and details may be made therein without departing from the spirit and scope of the invention as defined by the appended claims.

## Claims

1. A portable terminal having a protruding keypad comprising:
a main housing;
a sliding housing slidably coupled to the main housing such that it can expose or hide a part of a surface of the main housing;
a keypad module positioned on the main housing and adapted to be exposed or hidden as the sliding housing moves; and
a driving means positioned on the main housing to cause the keypad module, when exposed by the movement of the sliding housing, to protrude from a surface of the main housing.

2. The portable terminal as claimed in claim 1, further comprising
a display device positioned on the remaining part of a surface of the main housing.

3. The portable terminal as claimed in claim 1, wherein
the sliding housing has a function keypad positioned on a surface thereof, the function keypad comprising at least one key chosen from a group comprising a menu calling key, a direction key, a call/end key, and a select/cancel key.

4. The portable terminal as claimed in claim 1, wherein
the keypad module has numeric keys positioned on an upper surface, the numeric key being exposed or hidden as the sliding housing slides.

5. The portable terminal as claimed in claim 4, wherein
the numeric keys constitute a keypad of 6×2 array together with a pair of special character keys for inputting * and #.

6. The portable terminal as claimed in claim 1, wherein
the main housing has an opening formed on a part of a surface to provide a passage along which the keypad module can protrude.

7. The portable terminal as claimed in claim 6, further comprising:
a sliding guide fixed to a part of a surface of the main housing while being positioned on a side of the opening; and
a sliding plate positioned on the surface of the sliding housing and adapted to slide on the sliding guide.

8. The portable terminal as claimed in claim 7, further comprising:
a guide plate having a pair of guide ribs protruding from both lateral ends of a surface of the sliding guide, respectively, while extending in the direction of movement of the sliding housing and guide grooves formed on the inner surface of the guide ribs; and
a pair of sliding ribs protruding outwards from both lateral end surfaces of the sliding plate, respectively, while extending in the direction of movement of the sliding housing and adapted to engage the guide grooves in such a manner that they can slide therein.

9. The portable terminal as claimed in claim 6, further comprising:
a sliding guide fixed to a part of a surface of the main housing while being positioned on a side of the opening; and
a sliding plate positioned on the surface of the sliding housing and coupled to the sliding guide in such a manner that it can slide thereon while enclosing both lateral surfaces of the sliding guide.

10. The portable terminal as claimed in claim 1, wherein the driving means comprises:
a rotation link coupled to the inner peripheral surface of the main housing and adapted to rotate on the main housing as the sliding housing slides; and
a sliding link adapted to interfere with the other end of the rotation link and slide in the main housing as the rotation link rotates,
wherein the keypad module is adapted to protrude from a surface of the main housing as the sliding link slides.

11. The portable terminal as claimed in claim 10, wherein
the sliding link is adapted to move in a direction opposite to the direction of movement of the sliding housing.

12. The portable terminal as claimed in claim 10, wherein
the sliding link has a first link hole formed on an end thereof that extends in a direction perpendicular to the direction of movement of the sliding link, and the rotation link has a first link protrusion formed on the other end thereof and is positioned in the first link hole so that the rotation of the rotation link is converted into movement of the sliding link.

13. The portable terminal as claimed in claim 10, wherein
the sliding link has at least one second link hole formed thereon that is slanted relative to the direction of movement of the sliding link and the keypad module has at least one second link protrusion formed on each of both lateral surfaces thereof and positioned in the second link hole so that the movement of the sliding link is converted into up-and-down movement of the keypad module.

14. The portable terminal as claimed in claim 13, wherein
an end of the second link hole extends a predetermined distance in a direction parallel to the direction of movement of the sliding link and the second link protrusion is positioned on the end of the second link when the keypad module protrudes from the main housing.

15. The portable terminal as claimed in claim 1, wherein the driving means comprises:
a sliding link extending from at least one lateral end of the sliding housing to be drawn into the main housing and extending in the direction of movement of the sliding housing inside the main housing, and
wherein the keypad module is adapted to protrude from a surface of the main housing as the sliding link slides.

16. The portable terminal as claimed in claim 15, further comprising:
a link hole having a first section extending in the longitudinal direction of the sliding link and a second section extending from an end of the first section that is slanted relative to the first section; and
a link protrusion extending from the keypad module and positioned in the link hole, and
wherein the keypad module is adapted to move up and down as the sliding housing slides while the link protrusion is positioned in the second section of the link hole.

17. The portable terminal as claimed in claim 16, wherein
the link hole has a third section extending from an end of the second section that is substantially parallel to the first section and the link protrusion is positioned in the third section of the link hole when the keypad module protrudes from the main housing.

18. The portable terminal as claimed in claim 15, wherein
the driving means is positioned on each of both lateral surfaces of the keypad module while being substantially symmetric to each other.

19. The portable terminal as claimed in claim 1, wherein the driving means comprises:
at least one sliding link positioned on the main housing and adapted to slide in a direction opposite to the direction of movement of the sliding housing and cause the keypad module, when it is exposed, to protrude from a surface of the main housing; and
a gear module adapted to move the sliding link, as the sliding housing moves, by converting the direction of movement.

20. The portable terminal as claimed in claim 19, wherein the gear module comprises:
a first rack gear formed on the lower surface of the sliding housing in the longitudinal direction;
a first pinion gear positioned in the main housing in such a manner that it can rotate therein while being interlocked with the first rack gear; and
a second rack gear positioned in the main housing in such a manner that it can slide therein while being interlocked with the first pinion gear.

21. The portable terminal as claimed in claim 20, wherein
the second rack gear has a driving protrusion formed thereon, which is spaced from an end of the sliding link, when the sliding housing hides at least a part of the keypad module, and interferes with an end of the sliding link, when the keypad module is completely exposed, so that the sliding link slides.

22. The portable terminal as claimed in claim 20, wherein
the second rack gear has a driving protrusion formed thereon, the sliding link has a following protrusion formed thereon, which interferes with the first link protrusion as the second rack gear slides, and the driving and following protrusions are spaced from each other when the sliding housing hides at least a part of the keypad module, and interfere with each other when the keypad module is completely exposed, so that the sliding link slides.

23. The portable terminal as claimed in claim 20, further comprising:
a second pinion gear positioned to face the first pinion gear and adapted to rotate together with it when the keypad module is completely exposed, and wherein the second rack gear is adapted to move in a direction opposite to the direction of movement of the sliding housing as the second pinion gear rotates.

24. The portable terminal as claimed in claim 23, wherein
the second rack gear is integral with the sliding link.

25. The portable terminal as claimed in claim 23, wherein
the first pinion gear has a first rotation protrusion formed on a surface thereof, the second pinion gear has a second rotation protrusion formed on a surface thereof, and the first rotation protrusion is adapted to interfere with the second rotation protrusion, when the keypad module is completely exposed, so that the second pinion gear rotates.

26. The portable terminal as claimed in claim 20, further comprising a rack gear plate positioned in the main housing, on a surface of which the second rack gear is formed.
